# EUROPÄISCHE PATENTANMELDUNG

(11) **EP 4 057 474 A2**
(43) Veröffentlichungstag der Anmeldung: **14.09.2022**
(21) Anmeldenummer: 22155537.8
(22) Anmeldetag: 08.02.2022
(51) Int. Cl.: H02J 7/00

(54) **ENERGIESPEICHERSYSTEM**

(30) Priorität: 10.02.2021 DE 102021103090
(71) Anmelder: BOS Balance of Storage Systems AG, 89231 Neu-Ulm (DE)
(72) Erfinder: Seckinger, Benjamin, 89231 Neu-Ulm (DE)
(74) Vertreter: Patentanwaltzkanzlei Hutzelmann

(57) **Zusammenfassung**

Energiespeichersystem (1) zur Speicherung elektrischer Energie, wobei das Energiespeichersystem (1) modular aufgebaut ist undwobei einzelne Module, insbesondere Speichermodule (3), Schaltmodule, Wandlermodule und/oder Leistungselektronikmodule (33), in ein System eingesetzt werden können und entnehmbar ausgebildet sein können.

## Beschreibung

Die Erfindung bezieht sich auf ein Energiespeichersystem zur Speicherung elektrischer Energie.

Es sind viele verschiedene Energiespeichersysteme bekannt, die jedoch den Nachteil aufweisen, mit einer festen Speicher- und/oder Leistungsgröße versehen zu sein und so nicht an den Bedarf anpassbar zu sein.

Aufgabe der Erfindung ist es, ein Energiespeichersystem vorzuschlagen, welches an unterschiedliche Einsatzbedingungen, unterschiedliche Speichergrößen, unterschiedliche Leistungsgrößen, unterschiedliche Spannungslevels und dergleichen angepasst werden kann. Die Anpassung soll möglichst im laufenden Betrieb, auch durch Endkunden stattfinden können.

Diese Aufgabe wird erfindungsgemäß dadurch gelöst, daß das Energiespeichersystem modular aufgebaut ist.

Hierdurch ist das Energiespeichersystem skalierbar. Es können flexibel die Anzahl an Batterie-, Schalt- und/oder Wandler-Modulen angepasst werden.

Äußerst vorteilhaft ist es erfindungsgemäß dabei, wenn einzelne Module, insbesondere Speichermodule, Schaltmodule, Wandlermodule und/oder Leistungselektronikmodule, in ein System eingesetzt sind und entnehmbar ausgebildet sein können.

Hiermit lässt sich das Energiespeichersystem im laufenden Betrieb skalieren und zwar nicht nur hinsichtlich der Speicherkapazität, sondern auch hinsichtlich der Leistung. Die Skalierung kann dabei auch durch den Benutzer bzw. Endkunden erfolgen.

Eine weitere erfindungsgemäß sehr vorteilhafte Ausgestaltung liegt darin, daß die Module standardisiert ausgebildet sind und/oder daß das System und die Module eine standardisierte Schnittstelle aufweisen.

Durch die Standardisierung der einzelnen Module sind diese gegeneinander austauschbar. Unter Beibehaltung einer einheitlichen Backplane lässt sich so das System Plug-and-Play skalieren. Eine automatische Erkennung der Module ermöglicht Hot-Swap. Durch werkzeuglosen Austausch kann so auch ungeschultes Personal die Skalierung vornehmen. Dabei lassen sich nicht nur die Batteriemodule, sondern auch Leistungsmodule ergänzen, entnehmen und tauschen.

Äußerst vorteilhaft ist es erfindungsgemäß, wenn die Module, insbesondere Speichermodule mit zumindest rudimentärer Logikschaltung ausgerüstet sind.

Mit Hilfe dieser Logikschaltung sind die Speichermodule zumindest im Energiespeichersystem identifizierbar.

Weiterhin hat es sich als sehr vorteilhaft erwiesen, wenn eine Leistungselektronik zur Ladung und Entladung der Speichermodule dem jeweiligen Energiespeichersystem zugeordnet ist.

Durch die Anordnung der Leistungselektronik im Energiespeichersystem muss diese nicht in jedem Speichermodul vorgehalten werden. Zudem können unterschiedliche Energiespeichersysteme für unterschiedliche Spannungen ausgelegt sein, wohingegen die Speichermodule alle entweder ein und dieselbe Spannung aufweisen oder aber durch unterschiedliche Verschaltung der Speichermodule insich für unterschiedliche Spannungen genutzt werden können. Die Leistungselektronik kann selbst auch modular ausgebildet sein.

Eine sehr vorteilhafte Weiterbildung der Erfindung liegt vor, wenn ein Managementsystem zur Verwaltung, Ladung und Entladung der einzelnen Speichermodule und/oder Batteriezellen im jeweiligen Energiespeichersystem vorgesehen ist, wobei die Ladung und/oder Entladung der Module und/oder Batteriezellen anhand vorgegebener oder ermittelter Parameter erfolgt.

Äußerst vorteilhaft ist es gemäß einer Weiterbildung der Erfindung auch, wenn Sensoren, Sicherheitseinrichtungen und dergleichen, sowie ein Datenspeicher zur Identifizierung des jeweiligen Moduls, insbesondere Speichermoduls, dessen Leistungsdaten und Informationen über dessen Zyklen, Ladezustand und dergleichen im jeweiligen Speichermodul vorgesehen sind.

Hierdurch wird das jeweilige Speichermodul überwacht. Die ermittelten Daten stellen eine lange Lebensdauer des Speichermoduls sicher. Zudem werden die Speichermodule verwaltet, und sichergestellt, daß diese weder überladen noch tiefentladen werden. Entsprechend den Leistungsdaten und Informationen hinsichtlich Zyklen, Ladezustand, Wear-Level und dergleichen werden die einzelnen Speichermodule und/oder Zellen geladen und entladen, so daß eine optimale Ausnutzung der zur Verfügung stehenden Kapazität und Leistung bei minimaler Belastung und Verschleiß erfolgt. Eine automatische Anpassung der vorgegebenen Parametern kann entsprechend dem Verschleiß der Module erfolgen.

Erfindungsgemäß sehr vorteilhaft ist es, wenn eine Kommunikationsschnittstelle zwischen Modul, insbesondere Speichermodul und Energiespeichersystem vorgesehen ist, wobei über diese ein digitaler Handschake zwischen Modul und System ausgeführt werden kann.

Mit Hilfe dieser Kommunikationsschnittstelle werden Daten und Steuerbefehle zwischen Energiespeichersystem und Modul ausgetauscht.

Äußerst vorteilhaft ist es gemäß einer Fortbildung der Erfindung auch, wenn die Energiespeichersysteme für unterschiedliche Systemspannungen ausgelegt sind, die Speichermodule dagegen in der Regel auf einer festen Spannung arbeiten, die in der Regel zwölf Volt beträgt.

Ebenso hat es sich erfindungsgemäß als sehr vorteilhaft erwiesen, wenn die Speichermodule für variable Spannungen ausgelegt und einsetzbar sind, die vorzugsweise zwölf Volt oder ein mehrfaches davon betragen.

Damit lassen sich auf einfache Art und Weise durch entsprechende Verschaltung der Module Systeme mit 12 Volt, 24 Volt und 48 Volt aufbauen, wobei die Vielfachen von 12 Volt auch durch eine wahlweise interne Verschaltung der Speichermodule erfolgen kann. Es ist dabei denkbar, daß beispielsweise in einem Batteriemodul vier 12V Einheiten vorgesehen sind, deren Anschlüsse alle separat nach außen geführt sind und im System entsprechend verschaltet werden. Ebenso sind Hochvoltsysteme mit den standardisierten Speichermodulen denkbar. Diese "zerfallen" bei Entnahme aus dem System in Speichermodule mit Systemspannungen kleiner 60V, so daß keine besonderen Sicherheitsvorkehrungen getroffen werden müssen auch dies auch für Laien handhabbar ist.

Als sehr vorteilhaft hat es sich auch erwiesen, wenn die Energiespeichersysteme skalierbar ausgebildet sind, wobei Racks mit unterschiedlicher Anzahl von Aufnahmen für Speichermodule ausgerüstet sind, so daß sowohl Racks als auch Speichermodule skalierbar sein können.

Skalierbarkeit hinsichtlich Kapazität und Spannung ist hier vorgesehen. Das bedeutet, daß sowohl eine parallele als auch eine serielle Verschaltung der Speichermodule denkbar ist. Auf diese Art und Weise lassen sich mit identischen Speichermodulen sowohl 12V und 24V Systeme beispielsweise für Caravan, Reisemobil, Bus, LKW realsieren, aber auch 48V Heimspeichersysteme und sogar Hochvoltsysteme mit beispielsweise 400V für AC Umrichter.

Eine weitere sehr vorteilhafte Ausgestaltung der Erfindung liegt vor, wenn die Speichermodule sowohl in stationären oder mobilen Energiespeichersystemen eingesetzt werden können, wobei auch eine Anwendung in mobilen Geräten, Maschinen oder Anlagen vorgesehen sein kann.

Hierdurch wird nicht nur Energie transportabel, sondern auch die teuren Komponenten eines Energiespeichersystems und können so bedarfsgerecht an verschiedenen Orten, aber auch mobil eingesetzt werden. Ausschließlich die Backplane, an der die Module andocken, bleibt vor Ort. So ist es denkbar, daß in einem stationären System in beispielsweise einem Wohnhaus eine Mehrzahl von Speichermodulen in einem Energiespeichersystem eingesetzt sind. Soll nun in Urlaub gefahren werden, wird ein Teil der Speichermodule entnommen und in das für den Urlaub genutzte Wohnmobil eingesetzt und dort genutzt. Auch mobile Geräte, Anlagen oder Maschinen können durch Einsetzen von Speichermodulen mit Energie versorgt werden. Die Anwendung ist auch nicht auf Wohnmobile beschränkt, sondern kann beispielsweise auch auf Booten, in jeglichen Fahrzeugen oder dergleichen eingesetzt werden. Die Module können durch PV, Generatoren oder auch durch Netzstrom aufgeladen werden. Die Verschaltung mehrerer Energiespeichersysteme zu einem virtuellen Gesamtsystem ist denkbar. Dabei befinden sich die einzelnen Systeme an verschiedenen Orten und werden über ein Stromnetz miteinander virtuell gekoppelt.

Sehr vorteilhaft ist es auch, wenn die Speichermodule auf Basis von Lithium-Akkus, Bleiakkus oder dergleichen aufgebaut sind, wobei aber auch Module vorgesehen sein können, die eine Brennstoffzelle oder dergleichen aufweisen.

So lange die Nennspannung der Module gleich ist, können beliebige Technologien der Speichermodule miteinander kombiniert werden. Über die Logik des Gesamtsystems erfolgt dabei eine entsprechende Kopplung, die den einzelnen Technologien gerecht wird.

Ebenfalls sehr vorteilhaft ist es erfindungsgemäß, wenn die einzelnen Module anwenderseitig einsetzbar, entnehmbar und/oder austauschbar sind.

Hierdurch kann das Energiespeichersystem flexibel an die jeweiligen Bedürfnisse angepasst werden.

Gemäß einer weitere Fortbildung der Erfindung ist es auch sehr vorteilhaft, wenn für alle Module und auch die Backplane standardisierte Kontaktierungen vorgesehen sind, die berührungsgeschützt ausgebildet sein können.

Hierdurch lassen sich die Module wahlweise einsetzen, ohne daß es einer Anpassung der Kontaktierungen bedarf. Dennoch ist auch bei ungeschultem Personal sichergestellt, daß es keine Unfälle durch Kurzschlüsse oder dergleichen geben kann.

Eine weitere sehr vorteilhafte Weiterbildung der Erfindung liegt vor, wenn ein digitaler Handshake zwischen Modul und Backplane zur Identifizierung und Aktivierung des jeweiligen Moduls vorgesehen ist.

Hierdurch können Konfigurationen, Berechtigungen, Leistungsdaten oder dergleichen ausgetauscht werden und für den Betrieb entsprechend eingerichtet werden.

Im folgenden ist die Erfindung anhand eines Ausführungsbeispiels veranschaulicht.

Dabei zeigen:
- Fig. 1: eine schematische Übersicht eines Systems zur Energiespeicherung mit mehreren Einsatzmöglichkeiten,
- Fig. 2: eine schematische Darstellung eines in einem Wohnmobil verbauten Energiespeichersystems,

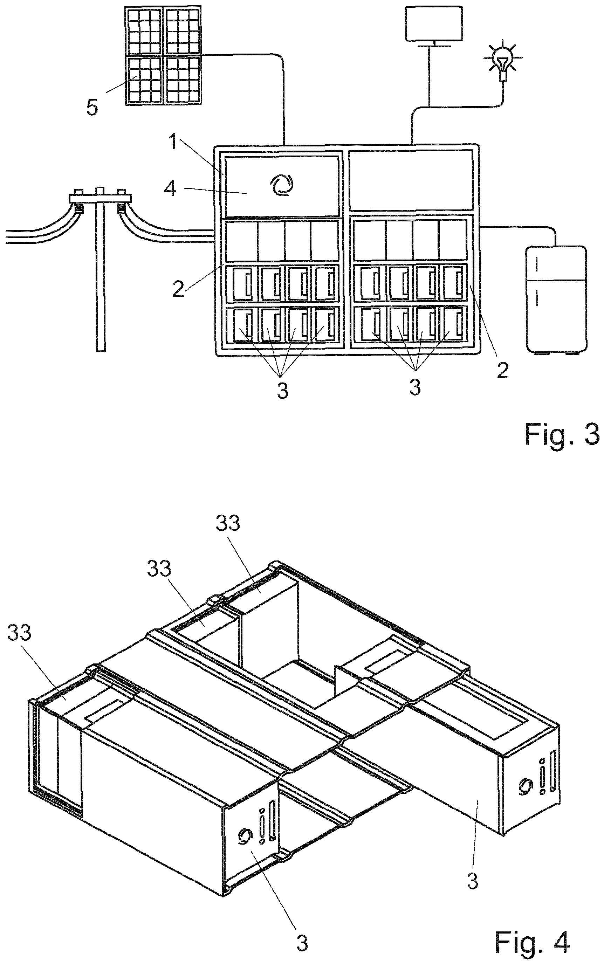

- Fig. 3: eine schematische Darstellung eines erfindungsgemäßen Energiespeichersystems in Kombination mit einem bestehenden Energiespeichersystem, und
- Fig. 4: mögliche Anordnungen von Speichermodulen.

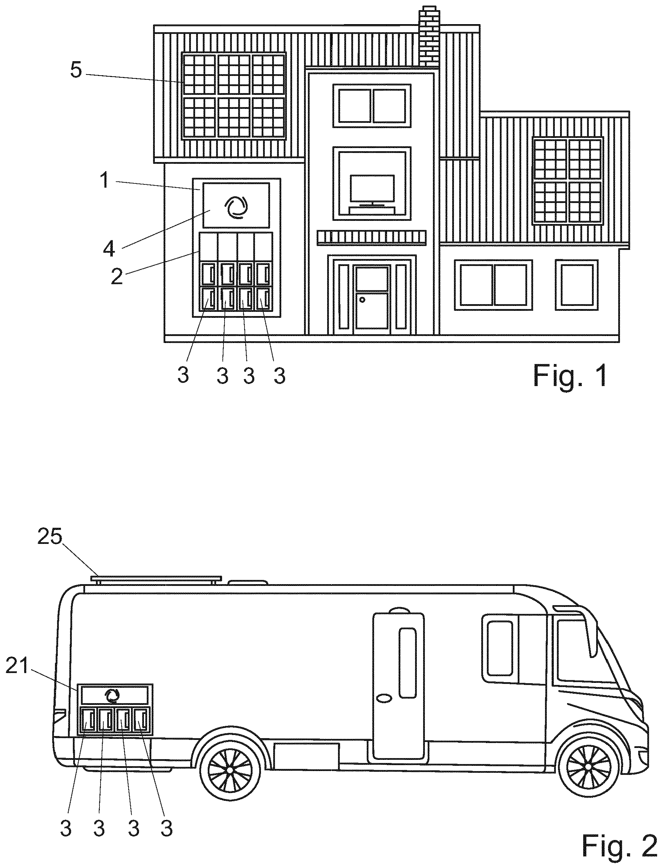

Mit 1 ist in Fig. 1 ein stationäres Energiespeichersystem beispielsweise in einem Wohnhaus bezeichnet. Dieses stationäre Energiespeichersystem 1 besteht aus einer Aufnahmeeinrichtung 2 für Speichermodule 3 und einer Leistungselektronik bzw. Steuerung 4.

Im vorliegenden Ausführungsbeispiel sind zwölf Aufnahmen für Speichermodule 3 vorgesehen.

Die Speichermodule 3 sind einzeln entnehm- und einsetzbar und zudem austauschbar.

Die Speichermodule 3 sind nur mit Logikschaltungen versehen und sind mit keiner Leistungselektronik ausgerüstet. Sensoren zur Überwachung der Speichermodule 3 können in den einzelnen Speichermodulen 3 und/oder in der Aufnahmeeinrichtung 2 vorgesehen sein.

Die Speichermodule 3 sind in diesem Ausführungsbeispiel LiFePO4 Akkus ausgeführt, wobei auch andere Akkus eingesetzt werden können. Die Speichermodule 3 sind auf zwölf Volt ausgelegt und besitzen in der vorliegenden Konfiguration eine Kapazität von einer Kilowattstunde.

Das bedeutet, daß das stationäre Energiespeichersystem in diesem Beispiel auf 12kWh ausgelegt ist.

Das Energiespeichersystem 1 wird beispielsweise durch eine PV-Anlage 5 gespeist. Andere Energiequellen sind denkbar. So kann beispielsweise das Energiespeichersystem 1 auch durch einen intermittierend laufenden Generator oder aus dem Stromnetz, beispielsweise zu Zeiten eines Stromüberangebotes, geladen werden.

Wird nun in Urlaub gefahren und dabei ein Wohnmobil, ein Boot, ein Caravan oder dergleichen genutzt, so kann ein Teil der Speichermodule 3 aus dem stationären Energiespeichersystem 1 entnommen werden und in ein mobiles Energiespeichersystem 21 eingesetzt werden. Solange nicht alle Speichermodule 3 aus dem stationären Energiespeichersystem 1 entnommen werden, bleibt dieses funktional und kann weiter arbeiten.

Im mobilen Energiespeichersystem 21 steht dann zunächst die in den übernommenen Speichermodulen 3 gespeicherte Energie zur Verfügung. Zudem kann dem mobilen Energiespeichersystem 21 eine oder mehrere Energiequellen zugeordnet sein. Denkbar ist eine PV-Anlage 25, ein mobiler Stromerzeuger oder aber auch der Generator des Fahrantriebs des jeweiligen Fahrzeugs.

Auch denkbar ist bei einem solchen mobilen Energiespeichersystem 21 auch, daß die Speichermodule bei Bedarf aus einem Stromnetz geladen werden können.

In diesem Zusammenhang ist es denkbar, daß das Mobile Energiespeichersystem 21 mit dem stationären Energiespeichersystem 1 einen virtuellen Verbund darstellt, so daß jeweils ein Energiespeichersystem vom anderen Energiespeichersystem Energie über ein Stromnetz erhält. Dies ist beispielsweise mit bekannten Smart-Metern kein Problem zu dokumentieren und abzurechnen.

Auch denkbar ist, daß mehrere mobile und/oder stationäre Energiespeichersysteme einen virtuellen Verbund bilden und daß auch zwischen diesen Energie verschoben wird. Auch dies ist aus messtechnischer Sicht problemlos darstellbar.

Nach Rückkehr nach Hause werden dann die Speichermodule 3 wieder zurück in das stationäre System gesteckt und stehen dort wieder zur Verfügung.

Es ist dabei denkbar, daß das stationäre System eine Betriebsspannung von 48 Volt aufweist, wohingegen das mobile System mit 12 Volt arbeitet.

Die Speichermodule 3 sind dabei immer dieselben. Der Unterschied liegt nur in der Verschaltung der Speichermodule 3 untereinander, welche ausschließlich durch das jeweilige Energiespeichersystem 1 bzw. 21 definiert ist. Es ist in diesem Zusammenhang auch denkbar, daß je nach Energiespeichersystem 1 oder 21 die Verschaltung der Zellen eines Moduls geändert wird. So ist es denkbar, daß mehrere Gruppen von Batteriezellen mit Anschlüssen nach außen versehen sind, so daß ein einzelnes Modul nicht nur mit 12V betrieben werden kann, sondern wahlweise auch mit 24V oder 48V.

Die entsprechende Leistungselektronik ist im jeweiligen Energiespeichersystem 1 bzw. 21 vorgesehen, so daß hier auch keine Probleme auftreten. Die Leistungselektronik umfasst dabei die für die Entnahme von elektrischer Energie notwendige Leistungselektronik wie beispielsweise Spannungswandler und/oder Wechselrichter als auch die für den Ladevorgang nötige Leistungselektronik.

Desweiteren ist es denkbar, daß die erfindungsgemäßen Energiespeichersysteme 1 bzw. 21 mit bestehenden Energiespeichersystemen kombiniert sind und diese aufwerten. So kann beispielsweise ein bestehendes Energiespeichersystem die Grundkapazität bereitstellen und das erfindungsgemäße Energiespeichersystem 1 bzw. 21 eine darüber hinausgehende Speicherkapazität, die durch die Speichermodule 3 skalierbar ist.

Eine weitere Einsatzmöglichkeit der Speichermodule 3 ist die stationäre oder mobile Energieversorgung von Geräten, Maschinen oder Fahrzeugen oder dergleichen.

So kann beispielsweise für den Betrieb einer Arbeitsmaschine oder eines Lastkarrens ein oder mehrere Speichermodule 3 aus dem Energiespeichersystem 1 bzw. 21 entnommen werden und für deren Betrieb genutzt werden.

Ist das Speichermodul 3 entladen, wird es wieder in das Energiespeichersystem 1 bzw. 21 eingesetzt und dort aufgeladen.

Selbst der Betrieb von Elektrofahrzeugen ist auf diese Art und Weise denkbar.

Die Speichermodule 3 können in ihren standardisierten Abmessungen so abgestimmt sein, daß diese den Abmessungen herkömmlicher, weit verbreiteter Fahrzeugbatterien in verschiedenen Größen entsprechen und diese so ersetzen können. So ist es denkbar, die oftmals bei Wohnmobilen eingesetzten Blei-Akkumulatoren mit 95Ah bzw. 100Ah durch ein oder zwei Speichermodule 3 zu ersetzen.

Eine entsprechende Aufnahme 2 ist im Fahrzeug eingebaut und stellt die erforderliche Elektronik für den Betrieb der Speichermodule 3 zur Verfügung. Die Elektronik für den Betrieb, das heisst vor allem die Leistungselektronik kann dabei ebenfalls in Modulbauweise in das System eingesetzt und jederzeit getauscht werden.

Die Aufnahmen 2 sind dabei grundsätzlich, aber nicht abschließend als Rack, beispielsweise Vierer-Racks zur Aufnahme von vier Speichermodulen 3 bevorzugt für 48Volt Systeme oder aber auch Einzelaufnahmen, die auch gestapelt oder nebeneinander angeordnet sein können für 12Volt Systeme, ausgebildet. Die Aufnahmen können dabei auch kaskadiert und so erweitert werden. Die Bildung von Hochvoltsystemen mit den einzelnen Speichermodulen ist denkbar.

In jeder dieser Aufnahmen 2 ist für jedes Speichermodul 3 ein Leistungskontroller 33 vorgesehen, welcher die Lade- und Entladeüberwachung des jeweiligen Speichermoduls vornimmt.

Zentralisiert ist für jedes Energiespeichersystem 1 bzw. 21 die Leistungselektronik vorgesehen.

Es ist aber auch denkbar, daß die Leistungselektronik ebenfalls modular aufgebaut ist und in Form von Modulen anstatt Speichermodulen 3 eingesetzt werden kann. Auch Schaltmodule sind hier denkbar.

Auf diese Art und Weise lässt sich nicht nur die Speicherkapazität des Systems 1 bzw. 21 skalieren, sondern auch dessen Leistung.

Die Module werden dabei mit einer standardisierten Schnittstelle ausgerüstet. Mittels automatischer Erkennung sind die Module nicht nur Plug-and-Play fähig, sondern auch Hot-Swap fähig. So kann bei werkzeugloser Ausgestaltung des Systems auch durch ungeschultes Personal eine Skalierung vorgenommen werden. Hierzu wird beispielsweise bei Entriegelung eines Moduls dieses vom System abgemeldet, die Anschlüsse stromlos geschaltet und kann dann so aus dem System gefahrlos entnommen werden. Wird nun wieder ein Modul eingesetzt, wird dieses über ein entsprechendes Handshake-Protokoll am System angemeldet, wobei dabei alle relevanten Daten ausgetauscht werden. Sofern die entsprechenden Berechtigungen bestehen, werden die Anschlüsse wieder eingeschaltet. Alle relevanten Daten werden bei diesem Handshake ausgetauscht.

In diesem Zusammenhang ist es auch denkbar, daß die Kontaktierungen der Module standardisiert ausgestaltet sind, wobei diese auch berührungsgeschützt ausgeführt sein können. Wesentlich ist aufgrund der hohen Ströme, daß eine sichere Kontaktierung erfolgt.

## Patentansprüche

1. Energiespeichersystem (1) zur Speicherung elektrischer Energie, **dadurch gekennzeichnet, daß** das Energiespeichersystem (1) modular aufgebaut ist.

2. Energiespeichersystem nach Anspruch 1, **dadurch gekennzeichnet, daß** einzelne Module, insbesondere Speichermodule (3), Schaltmodule, Wandlermodule und/oder Leistungselektronikmodule (33), in ein System eingesetzt sind und entnehmbar ausgebildet sein können.

3. Energiespeichersystem nach Anspruch 1 oder 2, **dadurch gekennzeichnet, daß** die Module standardisiert ausgebildet sind und/oder daß das System und die Module eine standardisierte Schnittstelle aufweisen.

4. Energiespeichersystem nach einem der vorangehenden Ansprüche, **dadurch gekennzeichnet, daß** die Module, insbesondere Speichermodule (3) mit zumindest rudimentärer Logikschaltung ausgerüstet sind.

5. Energiespeichersystem nach einem der vorangehenden Ansprüche, **dadurch gekennzeichnet, daß** eine Leistungselektronik (33) zur Ladung und Entladung der Speichermodule (3) dem jeweiligen Energiespeichersystem zugeordnet ist.

6. Energiespeichersystem nach einem der vorangehenden Ansprüche, **dadurch gekennzeichnet, daß** ein Managementsystem zur Verwaltung, Ladung und Entladung der einzelnen Speichermodule und/oder Batteriezellen im jeweiligen Energiespeichersystem vorgesehen ist, wobei die Ladung und/oder Entladung der Module und/oder Batteriezellen anhand vorgegebener oder ermittelter Parameter erfolgt.

7. Energiespeichersystem nach einem der vorangehenden Ansprüche, **dadurch gekennzeichnet, daß** Sensoren, Sicherheitseinrichtungen und dergleichen, sowie ein Datenspeicher zur Identifizierung des jeweiligen Moduls, insbesondere Speichermoduls (3), dessen Leistungsdaten und Informationen über dessen Zyklen, Ladezustand und dergleichen im jeweiligen Speichermodul vorgesehen sind.

8. Energiespeichersystem nach einem der vorangehenden Ansprüche, **dadurch gekennzeichnet, daß** eine Kommunikationsschnittstelle zwischen Modul, insbesondere Speichermodul (3) und Energiespeichersystem vorgesehen ist, wobei über diese ein digitaler Handschake zwischen Modul und System ausgeführt werden kann.

9. Energiespeichersystem nach einem der vorangehenden Ansprüche, **dadurch gekennzeichnet, daß** die Energiespeichersysteme (1) für unterschiedliche Systemspannungen ausgelegt sind, die Speichermodule dagegen in der Regel auf einer festen Spannung arbeiten, die in der Regel zwölf Volt beträgt.

10. Energiespeichersystem nach einem der vorangehenden Ansprüche, **dadurch gekennzeichnet, daß** die Speichermodule (3) für variable Spannungen ausgelegt und einsetzbar sind, die vorzugsweise zwölf Volt oder ein mehrfaches davon betragen.

11. Energiespeichersystem nach einem der vorangehenden Ansprüche, **dadurch gekennzeichnet, daß** die Energiespeichersysteme (1) skalierbar ausgebildet sind, wobei Racks mit unterschiedlicher Anzahl von Aufnahmen für Speichermodule ausgerüstet sind, so daß sowohl Racks als auch Speichermodule (3) skalierbar sein können.

12. Energiespeichersystem nach einem der vorangehenden Ansprüche, **dadurch gekennzeichnet, daß** die Module, insbesondere Speichermodule (3) sowohl in stationären oder mobilen Energiespeichersystemen (1, 21) eingesetzt werden können, wobei auch eine Anwendung in mobilen Geräten, Maschinen oder Anlagen vorgesehen sein kann.

13. Energiespeichersystem nach einem der vorangehenden Ansprüche, **dadurch gekennzeichnet, daß** die Speichermodule (3) auf Basis von Lithium-Akkus, Bleiakkus oder dergleichen aufgebaut sind, wobei aber auch Module vorgesehen sein können, die eine Brennstoffzelle oder dergleichen aufweisen.

14. Energiespeichersystem nach einem der vorangehenden Ansprüche, **dadurch gekennzeichnet, daß** die einzelnen Module anwenderseitig einsetzbar, entnehmbar und/oder austauschbar sind.

15. Energiespeichersystem nach einem der vorangehenden Ansprüchen, **dadurch gekennzeichnet, daß** für alle Module und auch die Backplane standardisierte Kontaktierungen vorgesehen sind, die berührungsgeschützt ausgebildet sein können.

16. Energiespeichersystem nach einem der vorangehenden Ansprüche, **dadurch gekennzeichnet, daß** ein digitaler Handshake zwischen Modul und Backplane zur Identifizierung und Aktivierung des jeweiligen Moduls vorgesehen ist.
